Europäisches Patentamt

European Patent Office

Office européen des brevets

(11) Veröffentlichungsnummer: **0 480 151 A2**

# EUROPÄISCHE PATENTANMELDUNG

(21) Anmeldenummer: **91114227.1**

(22) Anmeldetag: **24.08.91**

(51) Int. Cl.5: **G03B 17/30**

(30) Priorität: **07.09.90 DE 4028533**

(43) Veröffentlichungstag der Anmeldung:
**15.04.92 Patentblatt 92/16**

(84) Benannte Vertragsstaaten:
**DE FR GB IT NL**

(71) Anmelder: **Agfa-Gevaert AG**

**W-5090 Leverkusen 1(DE)**

(72) Erfinder: **Kluczynski, Achim**
**Dahler Strasse 34**
**W-5063 Overath(DE)**
Erfinder: **Lührig, Hermann, Dipl.-Ing.**
**Heinrich-von-Kleist-Strasse 12**
**W-5090 Leverkusen 1(DE)**

(54) **Filmkassette.**

(57) Eine Filmpatrone, bestehend aus einem zylindrischen Mantel (1) mit einer schlitzförmigen Öffnung für den Film (4), einer im Innern der Patrone angeordneten Spule (3) sowie zwei Endkappen (2) mit je einer kreisförmigen Öffnung zur Lagerung der Spule, bei der die Flansche (6) der Spule (3) an ihren äußeren Stirnflächen mindestens je einen ringförmigen, zur Spulenachse konzentrischen Vorsprung (7 bis 11) aufweisen, die Kontur der Kappen (2) komplementär zur Kontur der äußeren Stirnflächen der Spulenflansche (6) einschließlich der ringförmigen Vorsprünge (7 bis 11) gestaltet ist und die durch die ringförmigen Vorsprünge (7 bis 11) erzeugte Stufe größer als das Spulenspiel ist, ist besonders lichtdicht.

FIG.2

EP 0 480 151 A2

Die Erfindung betrifft eine Patrone für fotografischen Rollfilm, z.B. eine Patrone 135 entsprechend ISO 1007, mit einem Lichtlabyrinth zur Verbesserung der Lichtdichtigkeit der Patrone.

Filmpatronen der oben genannten Art werden von zahlreichen Firmen hergestellt und vertrieben. Diese Patronen sind jedoch, besonders bei einem hochempfindlichen Film, nicht völlig lichtdicht. Insbesondere dringt Licht in axialer Richtung zwischen den Spulenzapfen und den Kappenöffnungen der Spule ein und gelangt ins Innere der Patrone. Es entstehen dadurch Randbelichtungen an den äußeren Windungen des Films. Die Lesbarkeit der auf die Filmränder aufbelichteten Informationen, die sogenannten Signierungen, z.B. die neuerdings eingeführten Bildnummern in codierter Form (Bar-Code), wird durch das eindringende Licht beeinträchtigt oder sogar unmöglich.

Die in der US-PS 4 796 823 vorgeschlagene Aufrauhung der äußeren Spulenflanschoberflächen reduziert den Lichteinfall allenfalls geringfügig.

Auch die in der DE-OS 3 908 389 vorgeschlagene Lösung, an der Übergangsstelle zwischen Spulenzapfen und Spulenflansch den Spulenzapfen dicker zu gestalten, ergibt noch keine zuverlässige Abdichtung gegen axial einfallendes Licht.

Die Erfindung hat deshalb zur Aufgabe, eine Filmpatrone so zu gestalten, daß axial einfallendes Licht zuverlässig daran gehindert wird, bis ins Innere der Patrone zu gelangen und die Filmränder der äußeren Windungen zu belichten.

Diese Aufgabe wird durch die Merkmale des Hauptanspruchs gelöst. Weitere Einzelheiten, Merkmale und Vorteile der Erfindung sind den Unteransprüchen sowie der nachfolgenden Beschreibung von Ausführungsbeispielen und den beigefügten Zeichnungen zu entnehmen.

Es zeigt:

Fig. 1: einen Teilschnitt einer Patrone mit demontierbarer und wieder montierbarer Kappe nach dem Stand der Technik,

Fig. 2: einen Teilschnitt einer Patrone entsprechend Fig. 1 mit einem Lichtlabyrinth nach der Erfindung,

Fig. 3: einen Teilschnitt einer weiteren Patrone nach dem Stand der Technik mit fest montierten Kappen,

Fig. 4: einen Teilschnitt einer Patrone entsprechend Fig. 3 mit einem Lichtlabyrinth nach der Erfindung,

Fig. 5: einen Teilschnitt einer Patrone entsprechend Fig. 3 mit einer weiteren Form eines Lichtlabyrinths nach der Erfindung,

Fig. 6: einen Teilschnitt einer Patrone mit einer Modifikation des in Fig. 5 dargestellten Lichtlabyrinths,

Fig. 7: einen Teilschnitt einer Patrone mit einer Spule wie die Patrone der Fig. 6, jedoch mit einer anderen Kappenform,

Fig. 8: einen Teilschnitt einer Patrone wie in Fig. 7, jedoch mit Durchbrüchen in den Spulenflanschen,

Fig. 9: eine Draufsicht auf die Spule der Fig. 8,

Fig. 10: einen Teilschnitt einer weiteren Ausführungsform einer Patrone nach der Erfindung,

Fig. 11 eine Draufsicht auf die Spule der Fig. 10 und

Fig. 12: einen Teilschnitt einer weiteren Ausführungsform einer erfindungsgemäßen Patrone.

Bevor auf die Zeichnungen im Einzelnen eingegangen wird, sei darauf hingewiesen, daß bei den Zeichnungen zur Vereinfachung jeweils nur ein Teilschnitt desjenigen Endes der Patrone dargestellt ist, das den kürzeren der beiden Spulenzapfen aufweist. Spulenflansch und Kappe des anderen (nicht dargestellten) Endes der Patrone sind vorzugsweise jeweils identisch gestaltet.

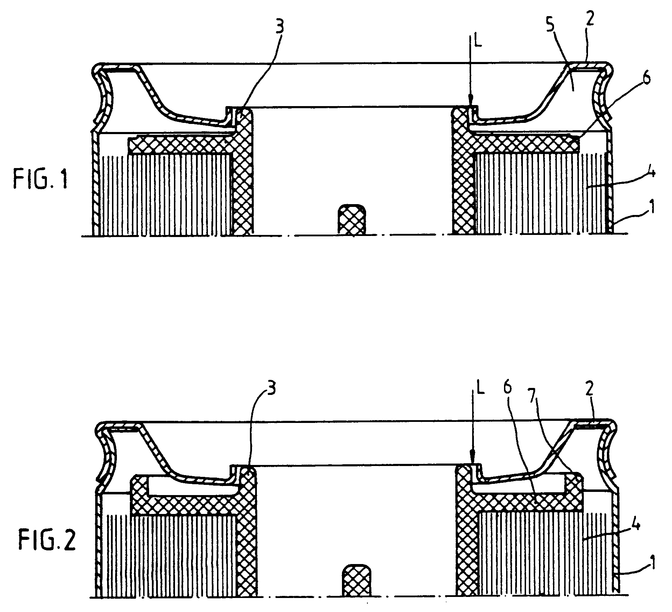

Fig. 1 zeigt eine Patrone nach dem Stand der Technik. Dargestellt sind der Patronenmantel 1, die Kappe 2 sowie die Spule 3, auf die der Film 4 aufgewickelt ist. Bei diesem Patronentyp ist es möglich, die Kappe mehrfach zu montieren und wieder abzunehmen. Das ist insbesondere für ambitionierte Amateure erforderlich, die die Patronen selbst mit als Meterware erhältlichem Film füllen, Um das erwähnte Aufsetzen und Abnehmen der Kappe zu erleichtern, weist die Kappe einen ringförmigen Hohlraum 5 auf, in den der Rand des Patronenmantels beim Abnehmen bzw. Aufsetzen der Kappe hineinfedern kann. Durch den Spalt zwischen Kappe 2 und Spule 3 tritt in der Praxis Licht, dargestellt durch den Pfeil L, in die Patrone ein und gelangt bis an die äußeren Windungen des Films 4, Die Filmränder werden dadurch verschleiert und die Lesbarkeit der aufbelichteten Informationen, wie die Bildnummern-Barcodes, beeinträchtigt oder sogar unmöglich.

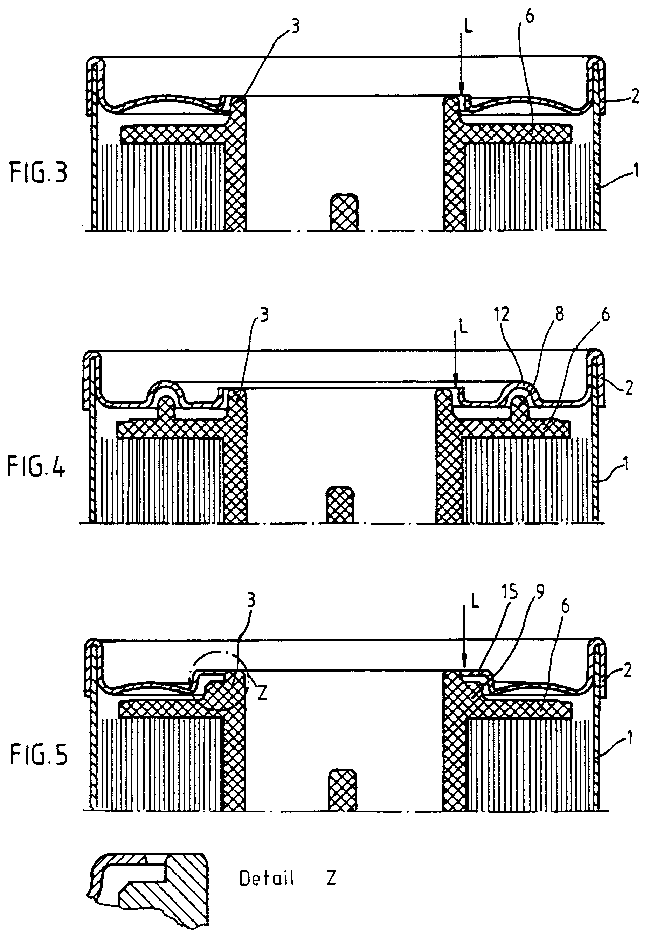

Fig. 2 zeigt eine Patrone des in Fig. 1 dargestellten Typs, die erfindungsgemäß dadurch verbessert ist, daß der Flansch 6 der Spule 3 mit einem ringförmigen Vorsprung 7, der in den ringförmigen Hohlraum 5 hineinragt, versehen wird, Es entsteht so ein Labyrinth, das für das in die Patrone eindringende Licht L eine Barriere darstellt. Die Belichtung der Filmränder wird dadurch verhindert.

Fig. 3 zeigt einen anderen Typ einer Patrone nach dem Stand der Technik. Bei diesem Typ wird die Kappe 2 durch Zusammenpressen ihres äußeren Randes fest mit dem Mantel 1 der Patrone verbunden. Durch Abnehmen der Kappe 2, was in der Praxis meist maschinell mit sog. Presplicern geschieht, wird die Patrone für eine Wiederverwendung unbrauchbar. Es ist ersichtlich, daß dieser Patronentyp keinen Hohlraum 5 aufweist. Um in ähnlicher Weise wie bei der in Fig. 2 dargestellten Patrone eine Barriere gegen einfallendes Licht errichten zu können, wird, wie in Fig. 4 dargestellt, die Kappe 2 mit einer ringförmigen Sicke 12 versehen, die etwa in der Mitte zwischen dem äußeren Rand und der in der Mitte liegenden Öffnung für den Spulenzapfen liegt. Der Flansch 6 der Spule 3 erhält einen ringförmigen Vorsprung 8, der so angeordnet ist, daß er in die Sicke 12 hineinragt. Es entsteht auf diese Weise wiederum ein Labyrinth und eine Barriere gegen das einfallende Licht L; die Belichtung der Filmränder wird dadurch verhindert.

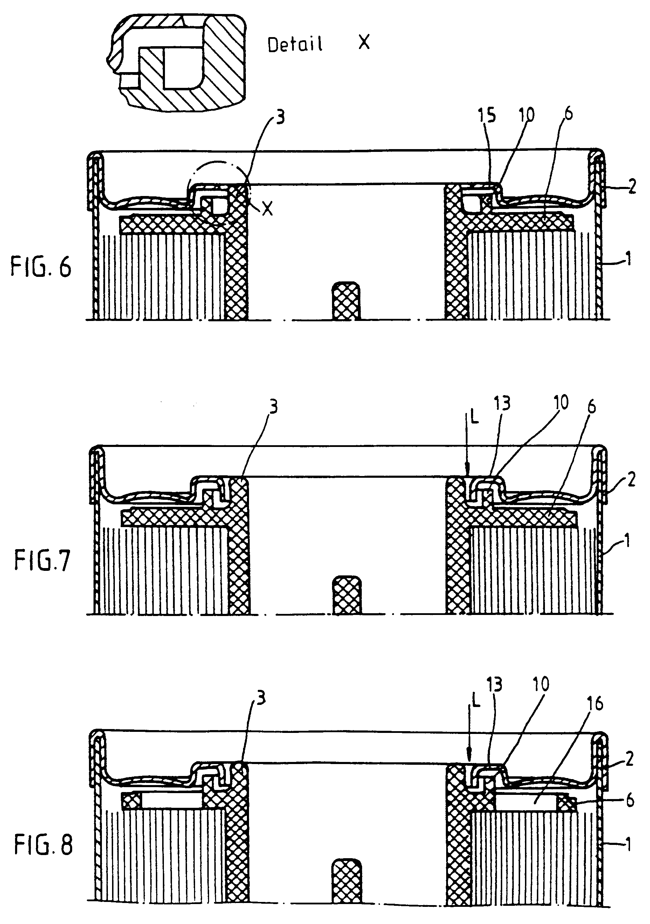

Die in Fig. 4 dargestellte Patrone ist für bestimmte Automaten zum Montieren der Kappen ungeeignet, da die Sicke 12 den Zugang des Werkzeugs zum Zusammenpressen des äußeren Randes der Kappe 2 behindert, Erfindungsgemäß wird deshalb vorgeschlagen, die Patrone so zu gestalten, wie in Fig. 5 dargestellt. Die Kappe 2 weist in der Mitte eine ringförmige Stufe 15 auf, die Spule 3 ist in unmittelbarer Nähe des Spulenzapfens mit einem ringförmigen Vorsprung 9 versehen. Da die Stufe 15 und der Vorsprung 9 komplementär zueinander gestaltet sind, entsteht wiederum ein Labyrinth und somit eine Barriere für das einfallende Licht L: die Belichtung der Filmränder wird dadurch verhindert.

Fig. 6 zeigt eine weitere, vorteilhafte Ausgestaltung der Erfindung. Die Form der Kappe 2 stimmt mit der in Fig. 5 dargestellten Ausführung weitgehend überein. Der Außendurchmesser der Stufe 15 ist jedoch etwas größer gewählt, außerdem ist statt des unmittelbar an den Spulenzapfen anschließenden Vorsprungs 9 ein ringförmiger Vorsprung 10 vorgesehen, der in geringem Abstand zum Spulenzapfen angeordnet ist. Dadurch wird die Barrierewirkung gegen einfallendes Licht L verbessert, außerdem wird die spritztechnisch ungünstige Materialanhäufung im Bereich des Vorsprungs 9 beseitigt.

Fig. 7 zeigt eine weitere erfindungsgemäße Patrone ähnlich der in Fig. 6 dargestellten Ausführung mit weiter erhöhter Barrierewirkung gegen einfallendes Licht L. Die Form der Spule 3 ist übereinstimmend mit derjenigen der Fig. 6. Die Kappe 2 hat jedoch statt der Stufe 15 eine ringförmige Sikke 13, deren innerer Schenkel in die zwischen Spulenzapfen und Vorsprung 10 vorhandene Nut eingreift. Diese Anordnung, die eine mehrfache Umlenkung des einfallenden Lichts L erzwingt, ist völlig lichtdicht.

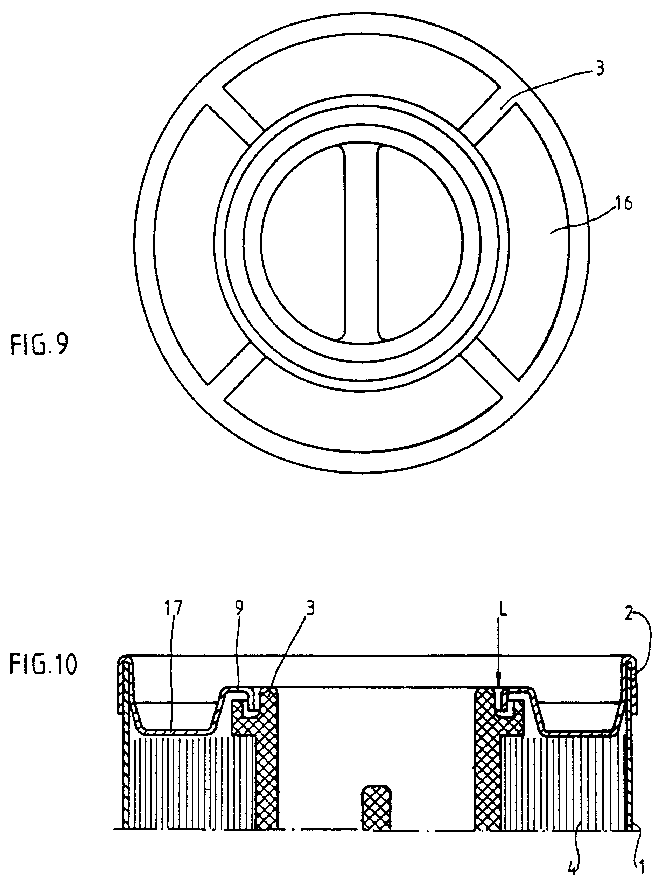

Die hervorragende Lichtdichtigkeit der in Fig. 7 dargestellten Anordnung erlaubt die in Fig. 8 dargestellte Ausführung einer erfindungsgemäßen Patrone. Bei dieser Ausführung weisen die Flansche 6 der Spule 3 zum Zwecke der Materialeinsparung Durchbrüche 16 auf. Diese Durchbrüche können verschiedene Formen haben, besonders materialsparend ist die in Fig. 9 dargestellte Form (Draufsicht auf die Spule 3 der Fig. 8), die etwa einem Speichenrad entspricht.

Wie in Fig. 10 dargestellt, kann man eine weitere Materialeinsparung bei der Spule 3 dadurch erzielen, daß die Flansche ganz weggelassen werden und die Kappe 2 Stützrippen 17, z.B. 6 Stück am Umfang, für den Film 4 erhält.

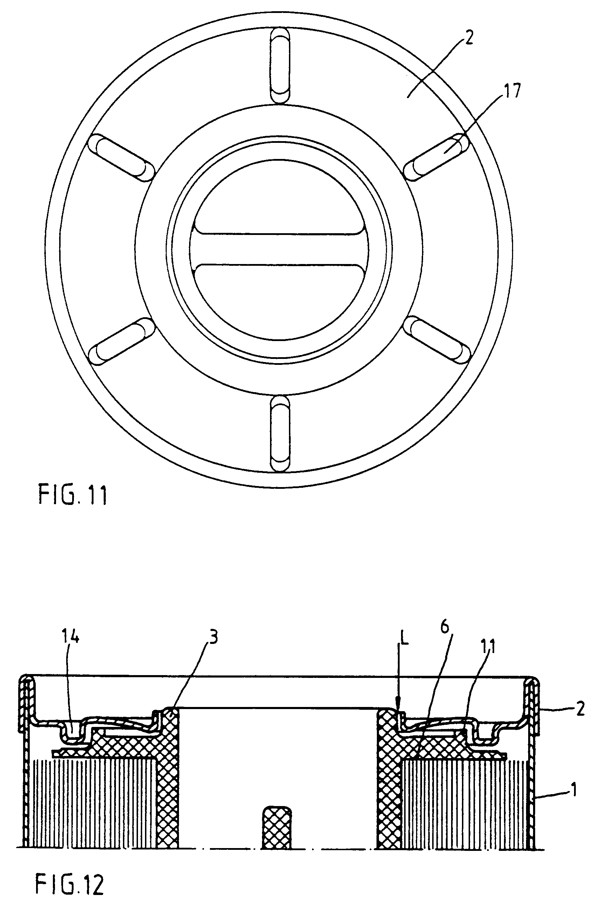

Fig. 11 zeigt die Kappe 2 mit 6 Stützrippen 17 in der Draufsicht.

Die in den Figuren 4, 5, 6, 7, 8 und 10 dargestellten Kappen haben gemeinsam, daß sie im Vergleich zu der in Fig. 3 dargestellten Originalform einer Kappe nach außen gerichtete Ausbuchtungen aufweisen, d.h. die Patrone wird um diese Ausbuchtungen größer. Will ein Hersteller dies, z.B. mit Rücksicht auf eigene Fertigungs- und Montageeinrichtungen, vermeiden, so bietet sich die in Fig. 12 dargestellte Ausführungsform an. Wie aus Fig. 3 ersichtlich, weist die Kappe 2 in der Originalform im Bereich zwischen dem äußeren Rand und der Öffnung für den Lagerzapfen der Spule 3 eine leicht nach außen gewölbte Kontur auf. Zur Erzeugung einer Lichtschutzbarriere wird auf den Flansch 6 der Spule 3 ein ringförmiger Vorsprung 11 aufgesetzt, dessen Höhe der Höhe der Kappenwölbung entspricht. Diese Maßnahme allein reicht jedoch nicht aus, um eine wirksame Lichtbarriere zu erzeugen. Deshalb wird zusätzlich außerhalb des Vorsprungs 11 die Flanschdicke reduziert und die Kappe mit einer ringförmigen Sicke 14 versehen, deren Tiefe so bemessen ist, daß sie bis an den in der Dicke verminderten Bereich des Spulenflansches heranreicht.

Filmpatronen werden, um leichte Drehbarkeit der Spule in den Kappenöffnungen zu gewährleisten, mit sogenanntem Spulenspiel (spool float lt. ANSI PH 1.14) hergestellt. In der Praxis beträgt das Spulenspiel ca. 0,3 bis 0,5 mm. Eine zuverlässige Barriere gegen eindringendes Licht wird bei den erfindungsgemäßen Spulen- und Kappenformen dann erreicht, wenn die dadurch erzeugten Stufen, die das Licht überwinden muß, um bis an den Film zu gelangen, größer sind als das Spulenspiel.

Liste der Bezugszeichen

| | |
|---|---|
| 1 | Patronenmantel |
| 2 | Kappe |
| 3 | Spule |
| 4 | Film |
| 5 | ringförmiger Hohlraum |

| | |
|---|---|
| 6 | Spulenflansch |
| 7, 8, 9, 10, 11 | ringförmiger Vorsprung |
| 12, 13, 14 | ringförmige Sicke |
| 15 | ringförmige Stufe |
| 16 | Durchbrüche |
| 17 | Stützrippen |
| L | einfallendes Licht |

**Patentansprüche**

1. Filmpatrone, bestehend aus einem zylindrischen Mantel (1) mit einer schlitzförmigen Öffnung für den Film (4), einer im Innern der Patrone angeordneten Spule (3) sowie zwei Endkappen (2) mit je einer kreisförmigen Öffnung zur Lagerung der Spule, dadurch gekennzeichnet, daß die Flansche (6) der Spule (3) an ihren äußeren Stirnflächen mindestens je einen ringförmigen, zur Spulenachse konzentrischen Vorsprung (7, 8, 9, 10, 11) aufweisen, daß die Kontur der Kappen (2) komplementär zur Kontur der äußeren Stirnflächen der Spulenflansche einschließlich der ringförmigen Vorsprünge (7, 8, 9, 10, 11) gestaltet ist und daß die durch die ringförmigen Vorsprünge (7, 8, 9, 10, 11) erzeugte Stufe größer als das Spulenspiel ist.

2. Filmpatrone nach Anspruch 1, bei der die Kappen (2) an ihrem äußeren Rand einen ringförmigen Hohlraum (5) aufweisen, dadurch gekennzeichnet, daß die Flansche der Spule (3) an ihrem äußeren Rand je einen ringförmigen Vorsprung (7) haben, der in den Hohlraum (5) hineinragt.

3. Filmpatrone nach Anspruch 1, dadurch gekennzeichnet, daß die Kappen (2) zwischen ihrem äußeren Rand und der Öffnung für den Spulenzapfen eine ringförmige Sicke (12) aufweisen und daß die Flansche (6) der Spule (3) je einen ringförmigen Vorsprung (8) haben, der in die Sicke (12) hineinragt.

4. Filmpatrone nach Anspruch 1, dadurch gekennzeichnet, daß die Kappen (2) im Zentrum eine ringförmige Stufe (15) aufweisen und daß die Flansche (6) der Spule (3) in unmittelbarer Nähe des Spulenzapfens einen ringförmigen Vorsprung (9) haben, der in die Stufe (15) hineinragt.

5. Filmpatrone nach Anspruch 1, dadurch gekennzeichnet, daß die Kappen (2) im Zentrum eine ringförmige Stufe (15) aufweisen und daß die Flansche der Spule (3) in geringem Abstand vom Spulenzapfen einen ringförmigen Vorsprung (10) haben, der in die Stufe (15) hineinragt.

6. Filmpatrone nach Anspruch 1, dadurch gekennzeichnet, daß die Kappen (2) im Zentrum eine ringförmige Sicke (13) aufweisen und daß die Flansche (6) der Spule (3) in geringem Abstand vom Spulenzapfen einen ringförmigen Vorsprung (10) haben, der in die Sicke (13) hineinragt.

7. Filmpatrone nach Anspruch 6, dadurch gekennzeichnet, daß die Spulenflansche (6) außerhalb der ringförmigen Vorsprünge Durchbrüche (16) aufweisen.

8. Filmpatrone nach Anspruch 5, dadurch gekennzeichnet, daß die Spule (3) außerhalb des Vorsprungs (10) keine Flansche aufweist und daß die Kappen zusätzliche Stützrippen (17) aufweisen, die bis an die Filmränder heranreichen.

9. Filmpatrone nach Anspruch 1, dadurch gekennzeichnet, daß die Flansche (6) der Spule (3) einen ringförmigen Vorsprung (11) aufweisen, dessen Höhe der Kappenwölbung entspricht, daß außerhalb des Vorsprungs (11) die Flanschdicke soweit reduziert ist, daß eine Stufe entsteht, die größer als das Spulenspiel ist, und daß die Kappen (2) eine ringförmige Sicke (14) haben, die bis an den in der Dicke reduzierten Bereich der Spulenflansche heranreicht.

FIG.1

FIG.2

FIG.3

FIG.4

FIG.5

Detail Z

EP 0 480 151 A2

Detail X

FIG. 6

FIG. 7

FIG. 8

FIG.9

FIG.10

FIG. 11

FIG.12